# EUROPEAN PATENT SPECIFICATION

(11) **EP 3 084 086 B1**
(45) Date of publication and mention of the grant of the patent: **31.03.2021**
(21) Application number: 14872589.8
(22) Date of filing: 19.12.2014
(51) Int. Cl.: E03B 1/04, A47K 3/28, E03C 1/00

(54) **REGULATION METHOD FOR WATER HYBRID DEVICES INVOLVING PURIFICATION, CIRCULATION AND/OR SEPARATION**
REGELVERFAHREN FÜR WASSERHYBRIDVORRICHTUNGEN EINSCHLIESSLICH REINIGUNG, ZIRKULATION UND/ODER TRENNUNG
PROCÉDÉ DE RÉGULATION POUR DISPOSITIFS HYBRIDES À EAU ENTRAÎNANT UNE PURIFICATION, UNE CIRCULATION ET/OU UNE SÉPARATION

(30) Priority: 20.12.2013 SE 1351572
(43) Date of publication of application: 26.10.2016
(73) Proprietor: Orbital Systems AB, 211 20 Malmö (SE)
(72) Inventor: SPARRE, Erik, 212 50 Malmö (SE); MAHDJOUBI NAMIN, Amir Mehrdad, S-211 34 Malmö (SE)
(74) Representative: AWA Sweden AB
(86) International application number: PCT/SE2014/051539
(87) International publication number: WO 2015/094109

(56) References cited:
- EP-A2- 0 855 473
- WO-A1-2007/045015
- WO-A1-2009/147647
- WO-A1-2013/095278
- NL-C- 1 039 131
- US-A1- 2011 146 800
- US-A1- 2013 180 928
- US-A1- 2013 212 800

## Description

### Field of the invention

The present invention relates to a method for regulation of a hybrid device allowing purification and either recycling or separation of water.

### Technical Background

All advanced systems have some kind of regulation or control system. The present invention is related to systems for water purification and circulation or separation. Examples of such systems are showers or wash basins or the like. In the following such devices are called hybrid devices, which is linked to the ability of recycling or separating away water which has been used, e.g. water flowing into a floor drain in a shower Such hybrid devices allowing purification and either recycling or separation of water are for example described in WO 2007/045015 A1 and WO 2009/147647 A1.

One purpose of the present invention is to provide a regulation method for such hybrid devices which is improved in terms of reliability regardless of water source and possible disturbances within the water loop of the system.

### Summary of the invention

The stated purpose above is achieved by a method for regulation of a hybrid device for showers, wash basins or the like for allowing purification and either recycling or separation of water, said method comprising:
- measuring a water quality parameter in water in the hybrid device in a measuring point;
- deciding the limit value of the water quality parameter based on measurement of the water quality parameter, said limit value being a reference for a limit value for clean water, wherein the step of deciding the limit value of the water quality parameter is performed automatically and with dynamic regulation, providing an automatic adjustment to the water source used; and
- if the water quality parameter in the measuring point is outside of the limit value of the water quality parameter then separating the water, and otherwise recycling the water in the hybrid device.

In this context the expression "regulation" has several synonyms, such as e.g. controlling, which is also embodied by the present invention.

The present invention is directed to deciding the limit value of the water quality parameter based on measurement of the water quality parameter, which implies an active regulation concept which is not regulated by use of determining an absolute value for the limit. Absolute values are otherwise used today for regulation of other hybrid devices.

In relation to the present invention is should be noted that the regulation method covers both a case where the measurement of a water quality parameter for obtaining an instantaneous value and the measurement for deciding the limit value is performed in the same position in the system, i.e. in one and the same sensor, and a case where these two measurements are performed in different positions and hence sensors. Therefore, according to one specific embodiment the measurement of the water quality parameter for deciding the limit value is performed in the measuring point in which an instantaneous value of the water quality parameter is measured. In another specific embodiment of the present invention, the measurement of the water quality parameter for deciding the limit value is performed in another measuring point than the measuring point in which an instantaneous value of the water quality parameter is measured. The latter case implies that although there is always an instantaneous value of the water quality parameter measured, it is not necessarily this measuring point that functions as the measuring point which sets the limit value range for what should be regarded as clean water in the system. Nevertheless, the method of regulation according to the present invention involves a dynamic regulation and not use of an absolute value. The present invention provides a regulation method which solves the problem related to the fact that the water supply to a hybrid device, such as a shower, normally has varying quality over time.

The above also implies that when stating "water" one should understand that this may refer to different parts of the flow held within the hybrid device according to the present invention.

Furthermore, the expression "hybrid device" is related to the ability of either recycling or separating away either depending on the quality of the water. The regulation is driven so that if the water quality parameter in the measuring point is outside of the limit value of the water quality parameter then the water is separated away as it is considered inexpedient. However, as long as the water is of good quality, then the water is recirculated in the hybrid device system for reuse. It may further be said that the water separated away may be further processed by purification or another type of treatment, or may be directed discarded and sent to a drain.

Moreover, the expression "if the water quality parameter in the measuring point is outside of the limit value of the water quality parameter" implies having a value indicating water which is not clean enough. Depending on what type of water quality parameter being used, this "outside" may refer to be above or below the measured value. With reference to the expression "clean water" this implies water which is acceptable to recycle in the system, i.e. does not have to be separated off. Furthermore, "separated off" does not evidently mean discard, but can imply to separate off a water stream which then is used for other purposes. Nevertheless, when the water is separated off it is not recycled in the primary recirculation loop of the system.

The present invention has several advantages. Firstly, the regulation provides for an automatic adjustment to the water source used. As water and its properties varies for different sources it is an advantage to use a "smart system" such as according to the present invention so that the water quality and the limit value of the water quality parameter may be individually set to specific conditions. Secondly, the regulation also ensures the hybrid device to adjust to disturbances within the system in a proper way. As the regulation is driven by dynamic regulation and not by use of an absolute value the system may adjust for a change within the system which is not affecting the water quality but in fact only affects the measuring values. One possible example thereof is the difference of contamination on measuring sensors vs. contaminants in the water. This is further discussed below.

As a further example, the present invention may also handle a permanent offset, e.g. between a sensor arranged on the inflow of water and a sensor in a water collecting unit arranged in the floor drain. Such an offset may e.g. occur if there is fouling or contaminants on the sensor in the collecting unit. As the system in such a case may detect the offset when comparing the values of the sensors over time, this can also be handled by the method so that the limit value is set when this is taken into account.

The present invention also provides an increased ability to regulate the system based on different needs and desires. This is not only possible by regulating on a direct water quality parameter, but also taking other parameters in consideration. For instance, if the supply of fresh water is very low, then it may be of interest to be able regulate the system in a high recirculation mode so that very little of the water is separated off, that is if such water is not purified in a subsequent unit and then returned back to the hybrid device. Then the hybrid device may have a comparatively increased filter effect, such as by comprising larger or more filters. On the other hand, when total cost of the system is the key factor, then the system may be regulated after parameters affecting this, such as filter consumption, and for instance cost of purification of the water, e.g. related to both level of contamination as well as temperature in the water.

### Brief description of the drawings

Fig. 1 shows a simplified flow chart for a hybrid device in which the regulation method according to one or more embodiments of the present invention may be conducted.
Fig. 2 shows a program flow of a possible regulation method loop according to one embodiment of the present invention.
Fig. 3 shows a graph of a regulation of a hybrid device according to the present invention.

### Specific embodiments of the invention

Some specific embodiments of the present invention are disclosed below.

According to one specific embodiment of the present invention, the limit value is set by statistical processing. According to another specific embodiment of the present invention the limit value of the water quality parameter is decided by calculating moving average. Calculating a moving average may be of interest in both of the above mentioned cases, i.e. when the limit value is decided in the same measuring point as for the instantaneous value and also in the case when this is made in another measuring point.

The direction of calculating a moving average or another form of mean value allows the system to adjust for natural changes in the water inflow. The memory setting the limits for the time period should at least cover the normal usage. One example is longer than 5 minutes as 6-7 minutes may be seen as a normal use of a hybrid device in the form of a shower.

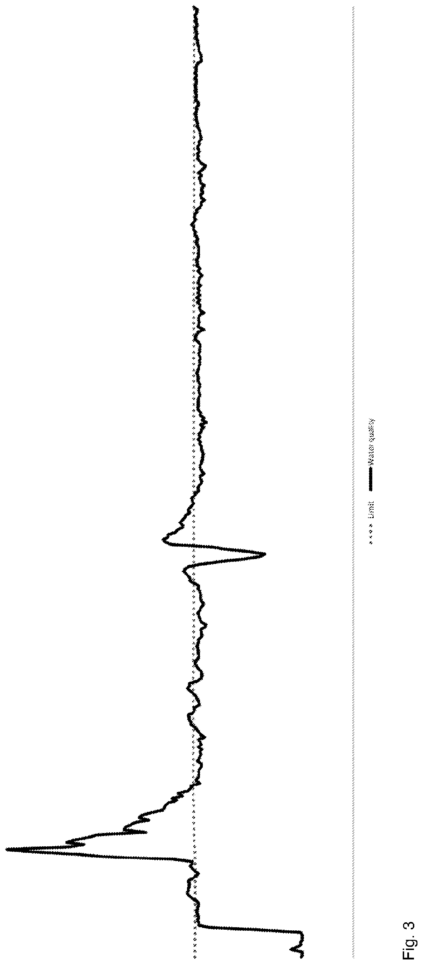

Furthermore, for the statistical processing many different mathematical methods of interest may be used. Therefore, the limit value may be set by different mathematical operations. Examples of possible operations to use are k-means clustering and/or moving average (e.g. low-pass filter). k-means clustering may be used to remove or filter off measuring values or groups which correspond to evidently contaminated water. As an example, when viewing fig. 3 the measuring values within the peak which exhibits high values and as such evidently contaminated value could be filtered off in the actual regulation method. As such, the limit value may be restricted in a further difficult way to ensure a higher reliability of clean water being used in the system. Moving average may also be used with the same intention, and in this case this is directed to filter off short variations. This feature provides a possibility of adjusting the system based on different types of conditions and certain desired results.

According to yet another specific embodiment of the present invention, the regulation also comprises prediction, and where separating or recycling of the water also is based on a predicted future value of the water quality parameter. By incorporating prediction in the regulation method, the system may also regulate on future plausible water quality. This is another possible feature in the "smart system" concept according to the present invention. To be able to predict a future value may eliminate or minimize other possible system problems to solve, such as time needed from sensor measurement to actual action within the system and delay in valves closing / opening when the system is going from recirculation to separation or vice versa.

It may further be said that a prediction mode according to the present invention may be directed to operating on calculation of the derivatives of the measured value of the water quality parameter. One possible example is to perform the prediction based on the actual measured value.

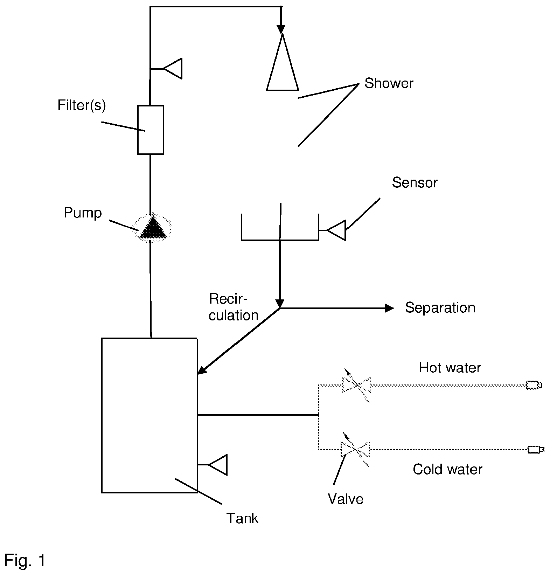

The measuring value for measuring an instantaneous value of the water quality parameter may be obtained in different positions within the hybrid device. According to one specific embodiment of the present invention, the measuring point for obtaining an instantaneous value of the water quality parameter is performed in or after a water collecting unit. A water collecting unit is positioned after an open part of the hybrid device. As seen in fig. 1 this open part is the actual shower in which water is sprayed over the user and then collected in a so called collecting unit. Moreover, in fig. 1 there is also shown a sensor located directly below the shower, which in this case is the sensor located in the water collecting unit.

The collecting unit may comprise a semi-open water supply line, but may be of many other types and shapes. The measuring point is suitable positioned within the collecting unit or in close proximity thereto. It should, however be noted that the measuring point in fact may be positioned after the collecting unit also, e.g. in the tank, before or after the pump or somewhere before the filter(s) as shown in fig. 1. As the measurement is directed to clean vs. contaminated water in the hybrid device, this point is not suitable after the filter or in the actual shower nozzle. It should however be noted that these positions may well comprise other sensors for measurement. As an example, one or more sensors, such as one electrical conductivity (EC) sensor, may be arranged after the filter. Such an EC sensor may measure the water quality parameter after the filter and the regulation method according to the present invention may be performed also by use of input from this EC sensor, e.g. to dynamically set the limit value(s).

Another example is a sensor for measuring the pressure after the filter(s) to obtain a value of a possible pressure drop over the filter(s) and as such indicate the level of consumption of the filter. Moreover, if the filter is defect this may also be noticed this way.

As understood from above, the present invention is directed to determining what should be regarded as contaminated water. To be able to do so clean water has to be defined, which is made by setting the limit value or limit values of the water quality parameter according to the present invention. Therefore, according to one specific embodiment of the present invention, deciding the limit value of the water quality parameter is performed by measuring the water quality parameter in a position and at a time when clean water is present. To be able to operate the system according to above, the system must "know" where clean water is to be measured. One possible example is to measure the water in the inflow or in the reservoir tank when it is certain that the tank only holds clean water. The latter may be evident when the tank just has been filled up with clean water after have being emptied.

Also the measuring point for deciding the limit vale may be located in different positions. As said above, this measuring point may well be one and the same as for measuring the instantaneous value. However, also other positions are possible. According to one specific embodiment, the measurement of the water quality parameter for deciding the limit value is performed in an inflow of water to the hybrid device. In another case the measurement of the water quality parameter for deciding the limit value is performed in a reservoir tank holding inflow water and/or recirculated water. Another alternative is a central sensor in a common inflow water for multiple hybrid devices in a system. In these cases there are several different options such as having one sensor locally on either the hot or cold water inflow, or one sensor in the reservoir tank holding inflow water and/or recirculated water.

As hinted above, the method according to the present invention may also involve additional regulation features. According to one specific embodiment, there is provided an additional input from a sensor so that the reliability is even further increased.

Furthermore, the regulation method may further be adjusted based on some parameters. One such is temperature. As cold contaminated water has a low energy content in comparison to hot contaminated water, it may also be of interest that the regulation also take the temperature of the water into account for the regulation. As such, the limit value may be dependent on the temperature of the water. Furthermore, also the water flow may be a parameter for which the method may be adjusted. In this case it is more a question of finding the best timing in when going from recirculation mode to separation mode and vice versa. As such, the regulation method according to the present invention may also involve means of delay when operation is going from recirculation mode to separation mode or vice versa. Delay may be incorporated based on inter alia the length of a semi-open water supply line, which at its end has an opening for flowing water to separation when the water is not clean enough, so that the timing to go from recirculation mode to separation mode or vice versa is optimized to the flow.

Moreover, e.g. the measured difference in pressures over the filter(s) may also be used for the regulation. As such the durability of the filters may be increased and filter fractures may be prevented.

The water quality parameter may be one or several parameters. Examples are density, surface tension, conductivity, osmotic pressure, detergency or turbidity. Conductivity is a preferred parameter to use as this may be measured by conductivity sensors, such as electrical conductivity (EC) sensor(s), which are an effective alternative both in terms of system solution and cost.

### Detailed description of the drawings

Fig. 1 shows a simplified flow chart for a hybrid device in which the regulation method according to one or more embodiments of the present invention may be conducted. In this case the hybrid device is a shower. Water is flowed into the system via cold and a hot line. The water is fed into a reservoir tank. Already on the inflow lines or in the tank there may be a sensor positioned. This sensor may be the sensor for deciding the limit value when a separate sensor is used for that. From the reservoir tank the water may be pumped through a purification unit, typically comprising one or several filters, such as e.g. one pre-filter and one nanofilter. The purified water is used in the shower and flows into a collecting unit in the floor drain. Such a water collecting unit may typically comprise a semi-open water supply line which at its end has openings linked to separation or recirculation. In the semi-open water supply line there is provided one or more sensors (see fig. 1 below the shower). In the sensor or sensors in this point of the hybrid device the instantaneous value is measured, but also the limit value may be decided by use of e.g. moving average.

If the water is clean enough then the water is recirculated to the reservoir tank, otherwise the water is separated off and possibly further processed by purification or treatment or simply discarded to a drain.

A sensor may e.g. also be arranged in other locations of the hybrid device, such as indicated after the filter(s). This may be arranged to provide for even further dynamic regulation.

As mentioned above, the water quality parameter may be conductivity and the sensors electrical conductivity (EC) sensor(s) comprising electrode pairs. As the EC sensor(s) may be linked to a reference changing over time the possible problem of fouling may be limited or eliminated. As such it is according to the present invention possible to run measurements of the conductivity even with layers of fat and other depositions on the sensor electrodes. Therefore, the present invention provides a "smart system" in which it is possible to differentiate dirt on electrodes from dirt/contaminants in the water.

It relation to use of the conductivity and the EC sensors it may further be said that these may be directed to measurement of resistance and where the conductivity then is obtained by conversion of the measured value(s) of resistance. The hybrid device may further comprise a micro processor to which the EC senor(s) are connected. Furthermore, it should also be said that the conductivity may also be used to measure other parameters besides water quality, such as level and flow.

In relation to the regulation method according to the present invention it should be noted that this method may be utilized on several related flows in one and the same hybrid device, such as a shower. As an example, the water from the bottom floor of a hybrid shower may e.g. be collected in multiple different collecting points having individual measuring points.

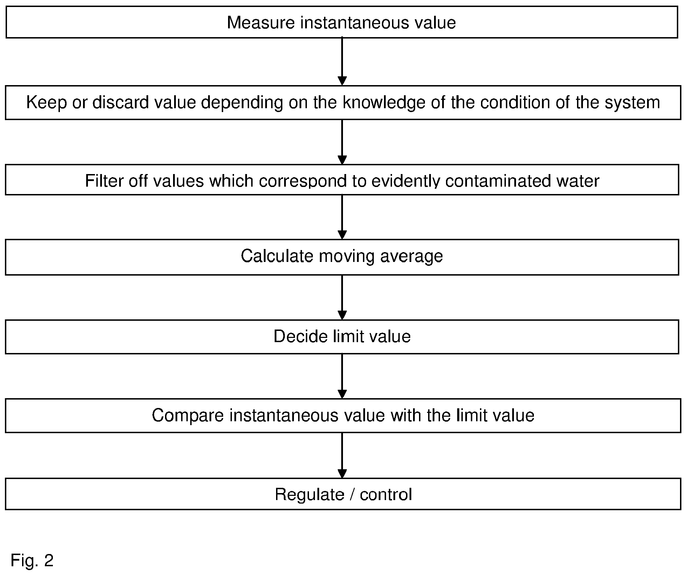

In fig. 2 there is shown one regulation loop according to one embodiment of the present invention. As may be noted from the blocks, there are several different possibilities according to the present invention, such as deciding the limit value in the same measuring point as for the instantaneous value or in another measuring point and e.g. using different forms of statistical processing. Furthermore, the step of deciding the limit value may also comprise taken into account other additional measuring parameters, such as temperature, pressure drop and/or flow, to adjust the regulation method.

In fig. 3 there is shown a graph of one regulation according to the method of the present invention, which in this case is performed in a hybrid shower device according to the present invention. As notable, the dotted line represents the limit value of the water quality over the period when the regulation is performed. The black line represents the actual water quality measurement in that point where this is measured during the same period of time.

First the system is dry and that is the reason why the actual measurement value is so comparatively low. Then water is pumped into the system and then the measured value, which is conductivity in this case, increases to another level. During the period of time different disturbances where incorporated, such as e.g. shampooing performed by the user showering. When this is performed the measurement of the water quality increases and creates a peak before going back again when the shampooing has been stopped by the user. As should be understood, a higher value implies a lower level of water quality, i.e. a less clean water or at least a water less suitable to recirculate in the system.

Furthermore, it may also be seen that the limit value changes over time based on the actual measurement value. Although this change of the limit value is quite small, which is desirable, it still is effected by the actual measurement value of the water quality over time. As such, the limit value is not given as a set fixed value in the system, but is actually dependent on the water used in the system and also the actual usage of the system, such as by shampooing by the user or the like.

## Claims

1. A method for regulation of a hybrid device for showers, wash basins or the like for allowing purification and either recycling or separation of water, said method comprising:
- measuring a water quality parameter in water in the hybrid device in a measuring point;
- deciding the limit value of the water quality parameter based on measurement of the water quality parameter, said limit value being a reference for a limit value for clean water, wherein the step of deciding the limit value of the water quality parameter is performed automatically and with dynamic regulation, providing an automatic adjustment to the water source used; and
- if the water quality parameter in the measuring point is outside of the limit value of the water quality parameter then separating off the water, and otherwise recycling the water in the hybrid device.

2. The method according to claim 1, wherein the measurement of the water quality parameter for deciding the limit value is performed in a measuring point in which an instantaneous value of the water quality parameter is measured.

3. The method according to claim 1, wherein the measurement of the water quality parameter for deciding the limit value is performed in another measuring point than a measuring point in which an instantaneous value of the water quality parameter is measured.

4. The method according to any of claims 1-3, wherein the limit value is set by statistical processing.

5. The method according to any of claims 1-4, wherein measuring values or groups which correspond to evidently contaminated water are filtered off all other measuring values or groups.

6. The method according to any of claims 1-5, wherein the limit value of the water quality parameter is decided by calculating moving average.

7. The method according to any of claims 1-6, wherein the regulation also comprises prediction, and wherein separating or recycling of the water also is based on a predicted future value of the water quality parameter.

8. The method according to any of the preceding claims, wherein the measuring point for obtaining an instantaneous value of the water quality parameter is performed in or after a water collecting unit.

9. The method according to any of claims 3-8, wherein deciding the limit value of the water quality parameter is performed by measuring the water quality parameter in a position and at a time when clean water is present.

10. The method according to any of claims 3-9, wherein the measurement of the water quality parameter for deciding the limit value is performed in an inflow of water to the hybrid device.

11. The method according to any of claims 3-9, wherein the measurement of the water quality parameter for deciding the limit value is performed in a reservoir tank holding inflow water and/or recirculated water.

12. The method according to any of the preceding claims, wherein the regulation in the method is adjusted based on water temperature, pressure drop over filter(s) and/or water flow.

13. The method according to any of the preceding claims, wherein the regulation in the method involves means of delay when operation is going from recirculation mode to separation mode or vice versa.

14. The method according to any of the preceding claims, wherein the water quality parameter is density, surface tension, conductivity, osmotic pressure, detergency or turbidity.

15. The method according to claim 14, wherein the water quality parameter is conductivity which is measured in electrical conductivity (EC) sensor(s).

## Patentansprüche

1. Verfahren zur Regelung einer hybriden Vorrichtung für Duschen, Waschbecken oder dergleichen zum Ermöglichen von Reinigung und entweder Wiederverwenden oder Trennung von Wasser, das Verfahren Folgendes umfassend:
- Messen eines Wasserqualitätsparameters im Wasser in der hybriden Vorrichtung in einem Messpunkt;
- Entscheiden des Grenzwerts des Wasserqualitätsparameters auf der Grundlage einer Messung des Wasserqualitätsparameters, wobei der Grenzwert eine Referenz für einen Grenzwert für sauberes Wasser ist, wobei der Schritt des Entscheidens des Grenzwerts des Wasserqualitätsparameters automatisch und mit dynamischer Regelung durchgeführt wird, wobei eine automatische Anpassung an die verwendete Wasserversorgung bereitgestellt wird; und
- wenn der Wasserqualitätsparameter in dem Messpunkt außerhalb des Grenzwerts des Wasserqualitätsparameters ist, dann Abtrennen des Wassers und andernfalls Wiederverwenden des Wassers in der hybriden Vorrichtung.

2. Verfahren nach Anspruch 1, wobei die Messung des Wasserqualitätsparameters zum Entscheiden des Grenzwerts in einem Messpunkt durchgeführt wird, in dem ein Augenblickswert des Wasserqualitätsparameters gemessen wird.

3. Verfahren nach Anspruch 1, wobei die Messung des Wasserqualitätsparameters zum Entscheiden des Grenzwerts in einem anderen Messpunkt als in einem Messpunkt durchgeführt wird, in dem ein Augenblickswert des Wasserqualitätsparameters gemessen wird.

4. Verfahren nach einem der Ansprüche 1 bis 3, wobei der Grenzwert durch statistisches Verarbeiten eingestellt wird.

5. Verfahren nach einem der Ansprüche 1 bis 4, wobei Messwerte oder -Gruppen, die offenkundig kontaminiertem Wasser entsprechen, aus allen anderen Messwerten oder -Gruppen ausgefiltert werden.

6. Verfahren nach einem der Ansprüche 1 bis 5, wobei der Grenzwert des Wasserqualitätsparameters durch Berechnen eines gleitenden Durchschnitts entschieden wird.

7. Verfahren nach einem der Ansprüche 1 bis 6, wobei die Regelung auch Prädiktion umfasst und wobei Trennen oder Wiederverwenden des Wassers auch auf einem vorhergesagten zukünftigen Wert des Wasserqualitätsparameters basiert.

8. Verfahren nach einem der vorhergehenden Ansprüche, wobei der Messpunkt zum Ermitteln eines Augenblickswerts des Wasserqualitätsparameters in oder nach einer Wassersammeleinheit durchgeführt wird.

9. Verfahren nach einem der Ansprüche 3 bis 8, wobei Entscheiden des Grenzwerts des Wasserqualitätsparameters durch Messen des Wasserqualitätsparameters in einer Position und zu einem Zeitpunkt durchgeführt wird, wenn sauberes Wasser vorhanden ist.

10. Verfahren nach einem der Ansprüche 3 bis 9, wobei die Messung des Wasserqualitätsparameters zum Entscheiden des Grenzwerts in einem Wassereinlass in die hybride Vorrichtung durchgeführt wird.

11. Verfahren nach einem der Ansprüche 3 bis 9, wobei die Messung des Wasserqualitätsparameters zum Entscheiden des Grenzwerts in einem Lagertank durchgeführt wird, der Einlasswasser und/oder rezirkuliertes Wasser hält.

12. Verfahren nach einem der vorhergehenden Ansprüche, wobei die Regelung in dem Verfahren auf der Grundlage von Wassertemperatur, Druckabfall über einem Filter(Filtern) und/oder Wasserdurchfluss angepasst wird.

13. Verfahren nach einem der vorhergehenden Ansprüche, wobei die Regelung in dem Verfahren ein Verzögerungsmittel einbezieht, wenn ein Betrieb aus einem Rezirkulationsmodus in einen Trennungsmodus geht oder vice versa.

14. Verfahren nach einem der vorhergehenden Ansprüche, wobei der Wasserqualitätsparameter Dichte, Oberflächenspannung, Leitfähigkeit, osmotischer Druck, Waschkraft oder Trübung ist.

15. Verfahren nach Anspruch 14, wobei der Wasserqualitätsparameter eine Leitfähigkeit ist, die in einem Sensor(Sensoren) der elektrischen Leitfähigkeit (EC) gemessen wird.

## Revendications

1. Procédé de régulation d'un dispositif hybride pour douches, lavabos ou similaires, permettant la purification et soit le recyclage soit la séparation d'eau, ledit procédé comprenant :
- la mesure d'un paramètre de qualité d'eau dans l'eau dans le dispositif hybride à un point de mesure ;
- la détermination de la valeur limite du paramètre de qualité d'eau en fonction de la mesure du paramètre de qualité d'eau, ladite valeur limite représentant une référence pour une valeur limite pour de l'eau propre, l'étape de détermination de la valeur limite du paramètre de qualité d'eau étant réalisée automatiquement et au moyen d'une régulation dynamique, en assurant un ajustement automatique de la source d'eau utilisée ; et
- si le paramètre de qualité d'eau au point de mesure dépasse la valeur limite du paramètre de qualité d'eau, alors la séparation de l'eau et, dans le cas contraire, le recyclage de l'eau dans le dispositif hybride.

2. Procédé selon la revendication 1, dans lequel la mesure du paramètre de qualité d'eau pour la détermination de la valeur limite est réalisée à un point de mesure où une valeur instantanée du paramètre de qualité d'eau est mesurée.

3. Procédé selon la revendication 1, dans lequel la mesure du paramètre de qualité d'eau pour la détermination de la valeur limite est réalisée à un point de mesure autre qu'un point de mesure où une valeur instantanée du paramètre de qualité d'eau est mesurée.

4. Procédé selon l'une quelconque des revendications 1 à 3, dans lequel la valeur limite est fixée par un traitement statistique.

5. Procédé selon l'une quelconque des revendications 1 à 4, dans lequel des valeurs ou des groupes de mesure correspondant à de l'eau manifestement contaminée sont éliminés par filtrage de tous les autres valeurs ou groupes de mesure.

6. Procédé selon l'une quelconque des revendications 1 à 5, dans lequel la valeur limite du paramètre de qualité d'eau est déterminée par un calcul de moyenne glissante.

7. Procédé selon l'une quelconque des revendications 1 à 6, dans lequel la régulation comprend également une prédiction, et dans lequel la séparation ou le recyclage de l'eau est également fonction d'une valeur future prédite du paramètre de qualité d'eau.

8. Procédé selon l'une quelconque des revendications précédentes, dans lequel le point de mesure pour l'obtention d'une valeur instantanée du paramètre de qualité d'eau est mis en œuvre dans ou après une unité de collecte d'eau.

9. Procédé selon l'une quelconque des revendications 3 à 8, dans lequel la détermination de la valeur limite du paramètre de qualité d'eau est réalisée par une mesure du paramètre de qualité d'eau à une position et à un moment où de l'eau propre est présente.

10. Procédé selon l'une quelconque des revendications 3 à 9, dans lequel la mesure du paramètre de qualité d'eau pour la détermination de la valeur limite est réalisée dans une arrivée d'eau du dispositif hybride.

11. Procédé selon l'une quelconque des revendications 3 à 9, dans lequel la mesure du paramètre de qualité d'eau pour la détermination de la valeur limite est réalisée dans une cuve réservoir contenant de l'eau d'arrivée et/ou de l'eau remise en circulation.

12. Procédé selon l'une quelconque des revendications précédentes, dans lequel la régulation dans le procédé est ajustée en fonction d'une température d'eau, d'une chute de pression à travers un (des) filtre(s) et/ou d'un débit d'eau.

13. Procédé selon l'une quelconque des revendications précédentes, dans lequel la régulation dans le procédé met en jeu des moyens de temporisation lorsque l'exploitation passe d'un mode de remise en circulation à un mode de séparation ou inversement.

14. Procédé selon l'une quelconque des revendications précédentes, dans lequel le paramètre de qualité d'eau est la densité, la tension superficielle, la conductivité, la pression osmotique, la détergence ou la turbidité.

15. Procédé selon la revendication 14, dans lequel le paramètre de qualité d'eau est la conductivité, laquelle est mesurée dans un (des) capteur(s) de conductivité électrique (EC).
